# EUROPEAN PATENT APPLICATION

(11) **EP 1 780 506 A2**
(43) Date of publication of application: **02.05.2007**
(21) Application number: 06123307.8
(22) Date of filing: 01.11.2006
(51) Int. Cl.: G01C 19/72

(54) **Interferometric fiber optic gyroscope (IFOG) using Modulation Technique for real-time calibration of wavelength reference under harsh environment**

(30) Priority: 01.11.2005 US 262911
(71) Applicant: Honeywell International Inc., Morristown, NJ 07962 (US)
(72) Inventor: Ren-Young, Liu, Mesa, AZ 85202 (US)
(74) Representative: Haley, Stephen

(57) **Abstract**

An interferometric fiber optic gyroscope (IFOG) includes a fiber light source (110), a multi-function integrated optic chip (IOC) (114) and corresponding fiber sensing coil (118), and a wavelength division multiplexor connected to each other via a coupler (112), along with servo loop closure processing electronics. In addition, an absolute wavelength reference, such as an atomic reference, that is not susceptible to drift or effects of radiation, is connected to the wavelength division multiplexor. Periodically and momentarily, and for purposes of calibrating the wavelength division multiplexor, gyro return light from the IOC (114), which is normally passed to the wavelength division multiplexor, is suppressed in favor of a signal supplied by the absolute wavelength reference.

## Description

This invention was made with Government support under contract no. DL-H531279. The Government has certain lights in the invention.

The present invention relates generally to interferometric fiber optic gyroscopes (IFOGs) and improvements thereto.

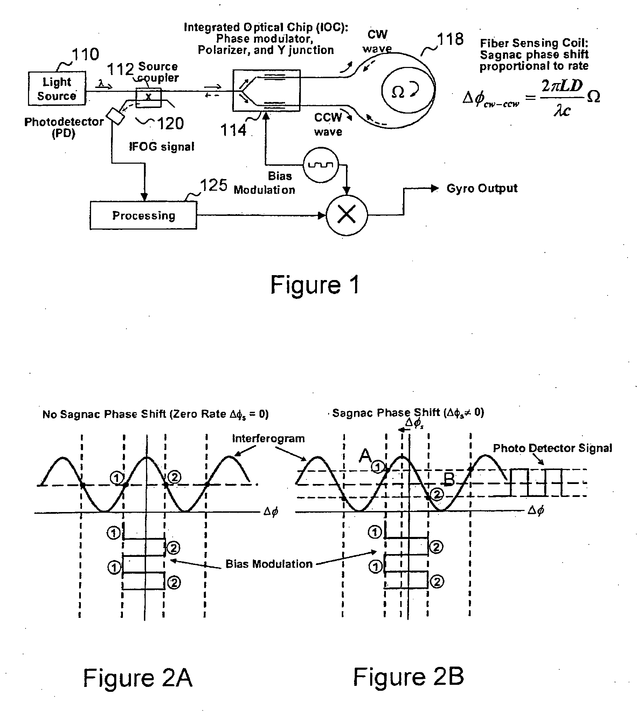

Figure 1 illustrates the basic operation and fundamental components of an IFOG. The IFOG design comprises six major components: fiber light source 110, coupler 112, multi-function integrated optic chip (IOC) 114 containing Y-junction and phase modulators, fiber sensing coil 118, photo detectors 120 and processing electronics 125. Fiber light source 110 generates light, and sends the light to the fiber sensing loop 118 through source coupler 112 and IOC 114. The source coupler 112 takes the input light and splits it in half to send it through both output legs. One output leg takes the source light further to IOC 114. The other output leg can be terminated without any further usage or used to detect the light intensity and excess noise for further processing. When the light is sent back through the sensing coil 118 and IOC 114, the source coupler 112 works in reverse with light sent to photo detector 120 for rate signal processing.

The IOC 114 has multiple functions implemented in a single chip as is well-known in the art, including Y-junction, polarizer, and phase modulators. The polarizer, which may be the waveguide itself such as a proton-exchange waveguide, polarizes the incoming light to accommodate not only single-polarization modulation, but also suppression of bias instability induced by the cross-couplings between the two polarization modes.. Without the polarizer the un-modulated light forms additional interference which reduces the contrast of the sensing interferometer. The Y-junction in the IOC splits the light into the sensing coil 118 for clockwise (CW) and counter clockwise (CCW) waves, This junction also combines the CW and CCW waves returning from the sensing loop 118 and sends the light back through the source coupler 112 and the photo detector 120. The phase modulator is used to modulate the light to create higher sensitivity with rate polarity in the interferogram. The modulator also provides the closed loop phase to cancel the Sagnac phase shift in closed loop operation.

Figures 2A and 2B illustrate a resulting interferogram, which is basically a raised cosine function corresponding to the interference pattern of the CW and CCW waves. Without the injected modulation, there is no sensitivity near zero due to constructive interference. At π (180°) phase difference, the interferogram shows destructive interference resulting in zero light intensity at the photo detector level. In normal IFOG operation, a square wave shown towards the bottom of Figure 2A is usually applied to the phase modulator to bias the interferogram away from the zero point to the phase of ±π/2 for rate detection sensitivity, linearity, and polarity. Figure 2B depicts the case when there is a Sagnac phase shift from the fiber sensing coil. This shifts the interferogram such that the bias modulation signal causes a square wave output at the photo detector 120. In open loop operation, the photo detector signal is demodulated in the IFOG processor 125 through subtraction of level B from level A to obtain the actual rotation rate. The rotation rate output is a function of the non-linearity of the interferogram. Fluctuation of the light intensity along the optical path including light source 110, coupler 112, IOC 114, coil 118, and multiple fiber splices also impact the rotation rate measurement accuracy. Open loop IFOG operation therefore requires significant compensation techniques to obtain reasonable bias stability and scale factor linearity performance.

In order to eliminate the dependency on the light intensity amplitude, another modulation technique called closed loop operation is now more commonly employed in IFOGs. The IFOG processor demodulates the photo detector signal and sends a feedback signal to the phase modulator to nullify the Sagnac phase shift. In other words, the closed loop operation forces the gyro to operate at the null condition. The digital representation of the voltage level necessary for locking at the null condition is continuously updated and stored in a register, such as an accumulator, inside the IFOG processing circuitry to indicate the magnitude of the feedback signal required to cancel the demodulation signal from photo detector. In closed loop operation, the rotation rate does not depend on the nos-linearity of the interferogram nor on the intensity fluctuation along the optical path. The closed loop design provides better modulation performance by eliminating power dependency and shifting the one to one scale factor nonlinearity to a square-root reduction due to imperfection in IOC and its associated drives. The high speed modulation required by the closed loop signal design makes the phase modulator the key component to high performance.

In addition to closed loop operation techniques, wave division multiplexor (WDM) based wavelength control has also recently been applied to IFOG devices to improve the IFOG's scale factor performance under harsh environment. While WDM-based wavelength control has significantly improved the IFOG's scale factor, some issues remain. For example, under certain radiation tests, it has been observed that a WDM can experience a wavelength shift of as much as 20 ppm which is a larger shift than desired, especially with respect to certain applications.

Thus, there is a need for still further improvements in IFOG performance.

The present invention introduces a unique and novel signal processing technique in IFOG loop-closure operations to temporarily suppress the gyro returned signal and at the same time extract radiation-induced (or any environmental-induced) wavelength drift, in real time, for reference WDM (scale factor) and dual-photodetector calibration. The suppression of the IFOG returned signal can be relatively short in terms of loop transit time or multiples of loop transit time. A key advantage of this processing technique is that it can be implemented electronically. And, no additional optical components such as modulators are needed.

For an IFOG integrated with (i) a WDM-based wavelength control servo and (ii) an absolute wavelength reference for high accuracy scale factor performance under harsh environments, there is a need to independently modulate the gyro returned signal along with the wavelength reference/servo signals to separate these two signals for further processing and calibration. In accordance with embodiments of the present invention, only the gyro rate-induced signal is modulated, but not the wavelength reference signal. This approach allows for the continued use of known multi-function IOC₅ in the sensing loop to temporarily shut off the gyro signal. More specifically, during normal IFOG operation, the gyro is biased at a point other than π for integrated-rate signal retrieval. Periodically, at a preset interval, the gyro return signal is shut off by biasing the gyro at π or multiples of π. During this short shut off period, there is no gyro return signal. Consequently, the WDM error plus the mismatch between the two photodetectors can be calibrated with the external absolute wavelength reference. The wavelength calibration can be open-loop through measuring the power difference of the two photodetectors pigtailed to the WDM output leads.

In one possible implementation, the technique is implemented in IFOG loop-closure circuitry embodied in a field programmable gate array (FPGA), or in an application specific integrated circuit (ASIC). The gyro bias is controlled by sending the proper modulation depth other than π (such as π/2 or 3π/4) to the phase modulator of the IOC. The gyro signal is on for most of the time, and off periodically for extracting the scale factor calibration information to be processed by the FPGA (or ASIC) for scale factor error calibration.

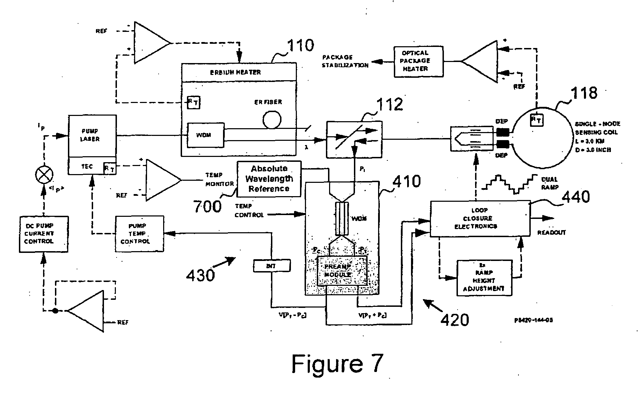

The scale factor calibration is performed as follows. When a WDM is fabricated as a scale factor reference device, it means that the 50/50 output splitting ratio of the WDM is tuned to the mean wavelength of the IFOG FLS with a certain tolerance. In an ideal situation, when light entering the WDM input port with the mean wavelength match to the 50/50 splitting ratio of the WDM, power output at the two output ports is equal and balanced. In other words, the power difference between the two output WDM ports is zero because there is no mean wavelength drift in the input port. Such a power difference at the two output ports versus mean wavelength drift at the input port is a linear relationship over a wide range. Should, for example, radiation, temperature, shock or vibration effect the mean wavelength of the WDM coupler and cause drift over time, the WDM is preferably recalibrated based on an absolute wavelength reference as shown in Figure 7. The absolute wavelength reference has a spectral line very close to the mean wavelength of FLS (also the mean wavelength of the 50/50 WDM coupler) employed in the IFOG. During the recalibration process, the gyro returned signal is shut off by modulating at π, power from the absolute wavelength reference is then launched into the WDM coupler for recalibration based on the same principle described above. Such a recalibration process, not only calibrate the the mean wavelength drift, but includes the responsivity mismatch between the two photodetectors, and can be AC modulated for better signal-to-noise ratio. The recalibration mean wavelength (scale factor) value is stored in the memory for further processing or sensor scale factor calibration.

These and other features of the present invention will be more fully appreciated upon a reading of the following detailed description and the associated drawings.

Figure 1 illustrates the basic operation and fundamental components of an IFOG.

Figures 2A and 2B illustrate a typical interferogram generated by an IFOG.

Figure 3 depicts a dual depolarizer IFOG design.

Figure 4 depicts an exemplary functional diagram of an IFOG.

Figures 5 and 6 illustrate successively improved performance characteristics of the IFOG of Figure 4.

Figure 7 illustrates an exemplary embodiment of the present invention.

The very first fiber optic gyroscopes were constructed using single mode (SM) fiber. At that time, it became obvious that uncontrollable and environmentally dependent polarization evolution occurring in the SM fiber is manifested as bias drift and signal fading. The bias drift results from polarization errors while signal fading is a consequence of polarization wander. Polarization maintaining (PM) fiber, which appeared on the market in the early 1980s, offered properties which preserved the simplicity of the gyroscope architecture and at the same time offered a simple solution to the problems of signal fading and polarization errors, Therefore, the most prevalent design thus far has used PM fiber to meet the stringent performance requirements of navigation gyroscopes,

An effort to make FOG technology affordable triggered investigation in depolarized gyroscopes which use inexpensive SM fiber in the sensing loop. In recent years, a series of breakthroughs have advanced depolarized IFOG technology from the tactical-grade into the navigation-grade performance level over the full environmental specifications.

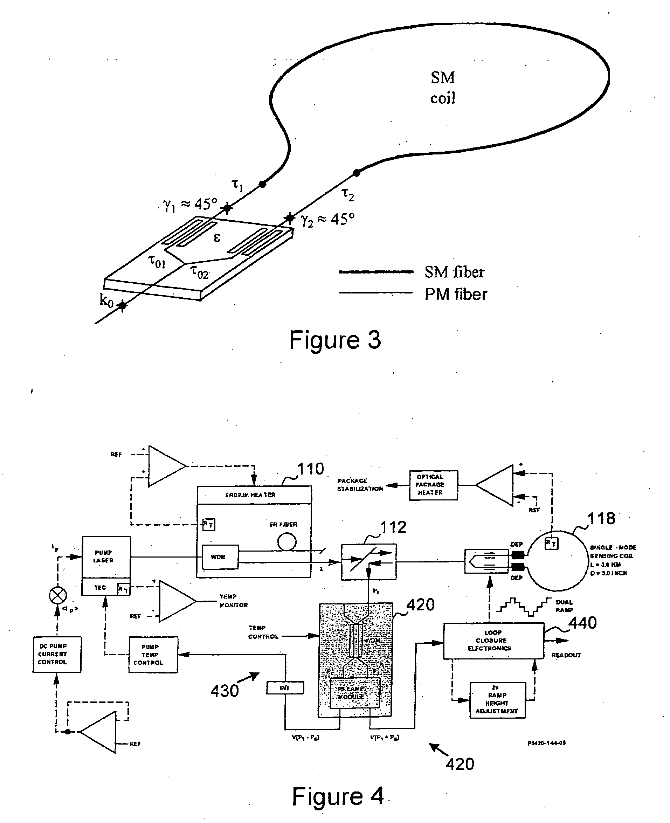

*Dual Depolarizer Design -* In fiber optic gyros which use SM fiber, light is depolarized before entering the gyro loop. Depolarization is accomplished by bunching linearly polarized light, emerging from the IOC, into the sections of polarization maintaining fibers at 45°, as shown in Figure 3. Since light propagates with different velocities in the two eigen states of linearly birefringent PM fiber, there is a delay between the eigen modes (often called the fast and the slow propagation mode). The birefringence induced delays t₁ and t₂ in two depolarizers are substantially longer than the coherence time of the light source, t_{c}. Therefore, after propagating through the depolarizer, the light in the fast mode is decorrelated with the light in the slow mode resulting in "random" polarization state at the end of the depolarizer. The gyro architecture shown in Figure 3, which utilizes two depolarizers located on the opposite sides of the loop, provides increased immunity to several non-reciprocal effects, and thus establishes the preferred architecture for low drift applications. It is noted that SM fiber could also be used.

**The High-Performance Depolarized IFOG with Ultra-High Scale Factor Accuracy.** A high-performance depolarized gyro design utilizes a dual depolarizer gyro architecture like that illustrated in Figure 3. An exemplary function diagram of such an IFOG is shown in Figure 4. Light from the fiber light source (FLS) 110 propagates through a 50/50 coupler (or a circulator) 112 to the integrated optics chip (IOC) 114 where the light wave is split into clockwise and counter-clockwise waves. Rotation introduces a phase shift, j_{S}, between these two waves. After propagating through the coil 118 waves recombine at the IOC 114 and are then routed through the circulator 112 to wave division multiplexor (WDM) 410. The WDM 410 splits the incoming wave again. However, this time, the splitting ratio reflects the mean wavelength of the arriving light wave. Dual detectors at the WDM 410 provide information about the total power, P_{C} + P_{T}, and power difference between the two ports of the WDM 410, P_{C} - P_{T}. The respective signals are used to close two servo loops: rotation sensing loop 420 and mean wavelength control loop 430, as shown in Figure 4. The total power, P_{C} + P_{T}, when processed by dosed loop electronics 440 provides information about the non-reciprocal, rotation-induced Sagnac phase shift, j_{S}, between the counter propagating waves. The loop is closed by the phase modulation which injects into the gyro loop the phase shift equal in magnitude but opposite in sign to j_{S}.

The power difference, P_{C} - P_{T}, on the other hand, provides a measure of the mean wavelength and it is used to close the mean wavelength servo loop 430 by changing the operating condition of the fiber light source 110. The wavelength servo can be replaced by wavelength calibration in which power difference of the WDM coupler is fed to the loop-closure electronics for digitization, processing and gyro scale factor calibration, all done by firmware control and processing (see Figure 7). In a preferred implementation, the components shown in the block diagram of Figure 4 (and Figure 7) are in temperature stabilized environment.

### Scale Factor

The scale factor is directly proportional to the mean wavelength and to the size of the sensing coil both of which can be affected by environmental perturbation, especially radiation. The approach according to embodiments of the present invention is to maximize the mean wavelength stability of the light arriving to the WDM and further improve the stability by employing WDM based active wavelength control or calibration. Preferably, close attention is also paid to the design of the sensing coil and its mechanical stability.

***FLS stability:*** Typically, the spectrum of a fiber light source (FLS) can be decomposed into a sum of three gaussian functions. The analysis of the spectra before and after radiation clearly indicates that not all of the gaussian peaks comprising the spectrum are affected by the radiation, to the same degree. The emission peak which is most stable (in wavelength and power) is the peak at 1.53mm. An FLS with power contained primarily in the 1.53mm emission peak is known. See, for example, U.S. Patent 6,744,966, which is incorporated herein by reference. This passive spectral shaping design results in substantial reduction of the radiation induced mean wavelength shift from 2100ppm (without spectral shaping), to about 13ppm (with spectral shaping).

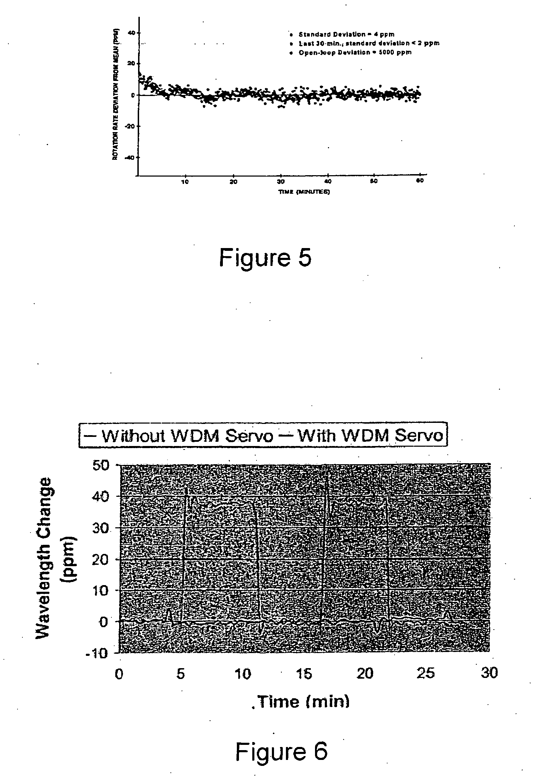

***Active Wavelength Control:*** By using the WDM 410 it is possible to continuously monitor the mean wavelength of the arriving light and alter the operating point of the light source to compensate for the changes. In experimental work with WDM-based wavelength control, reduction of the mean wavelength instabilities by a factor of 2500 has been demonstrated. Figure 5 reveals the source wavelength recovery from 5000 ppm perturbation to a better than 2 ppm stability in that measurement, following the closure of active wavelength control loop. For a high-performance IFOG employing an improved FLS centering around 1.53mm, the thermal gradient across the active wavelength control package was managed to < 0.05°C to achieve a still further reduction of mean wavelength instabilities from 13ppm to sub-ppm level, as shown in Figure 6.

Active wavelength control using the gyro detected signal is especially desirable because radiation can affect not only the FLS but also the transmission properties of the fiber used in the sensing coil, which also leads to the shift of the mean wavelength. Additional information about active wavelength control can also be found in U.S. Patents 5,323,409 and 5,684,590, which are incorporated herein by reference.

The above discussion is based on the assumptions that WDM 410, the wavelength reference device, does not vary more than the scale factor accuracy that is to be achieved. However, it was determined that even when WDM temperature is stabilized to < 0.05°C the WDM characteristic might still drift over time and the gyro scale factor would drift accordingly. It was also determined that WDM 410 can drift at least 20 ppm under certain radiation exposure. To remedy this long-term drift and radiation-induced error for the mean wavelength of WDM 410, the present invention includes an Absolute Wavelength Reference 700, as shown in Figure 7, that is connected to one of the input ports of WDM 410. This absolute wavelength reference 700 could be, for example, an atomic reference or other reference device that will not change with time or external perturbation. In accordance with modulation and demodulation techniques of the present invention, the IFOG operating cycle is split into measurement and calibration periods. More specifically, the IFOG measures the input rotation rate most of the time by operating at other than +/-π (preferably at either 1/2π or 3/4π for better random noise). And, depending on the application and/or environmental dynamics, for a fraction of the duty cycle (e.g., from 0.01% to 10%), the IFOG operates at π to shut down the gyro returning signal (light) and let only the signal from the Absolute Wavelength Reference 700 reach the system detector to calibrate the IFOG scale factor. When the gyro is operated at +-π, the return signal is leaked into the substrate of Y-junction (the 4^{th} port), so no gyro signal is returned. Calibration is preferably performed within loop closure electronics 440, or a related circuit.

The foregoing disclosure of the preferred embodiments of the present invention has been presented for purposes of illustration and description. It is not intended to be exhaustive or to limit the invention to the precise forms disclosed. Many variation and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims, In addition, the claims directed to the method and/or process of the present invention should not be limited to the performance of their steps in the order written, and one skilled in the art can readily appreciate that the sequences may be varied and still remain within the spirit and scope of the present invention.

## Claims

1. An interferometric fiber optic gyroscope (IFOG), comprising:
a fiber light source (110);
a coupler (112), having a first port, a second port and a third port, the first port coupled to the fiber light source (110);
a multi-function integrated optic chip (IOC) (114) and corresponding fiber sensing coil (118) connected to the second port of the coupler (112);
a wavelength division multiplexor having a first input port and second input port, the first input port being in communication with the third port of the coupler (112), and having a first output port and a second output port, the first output port supplying a signal to a rotation sensing servo loop and the second output port supplying a signal to a mean wavelength control servo loop; and
an absolute wavelength reference connected to the second input port of the wave division multiplexor.

2. The IFOG of claim 1, wherein a signal from the absolute wavelength reference is intermittently applied to the wavelength division multiplexor.

3. The IFOG of claim 1, wherein a signal from the third port of the coupler (112) is intermittently suppressed.

4. The IFOG of claim 1, wherein a signal from the absolute wavelength reference is intermittently applied to the wavelength division multiplexor and, substantially simultaneously, a signal from the third port of the coupler (112) is suppressed.

5. The IFOG of claim 1, wherein at least the wavelength division multiplexor is temperature stabilized.

6. The IFOG of claim 1, wherein fiber sensing coil (118) is temperature stabilized.

7. The IFOG of claim 1, wherein the coupler (112) is a 50/50 coupler.

8. The IFOG of claim 1, wherein the fiber sensing coil (118) comprises single-mode fiber.

9. The IFOG of claim 1, wherein the absolute wavelength reference comprises an atomic reference.

10. The IFOG of claim 1, wherein the rotation rate deviation from mean is less than about 2 parts per million over a thirty minute period.
